# FASCICULE DE BREVET EUROPEEN

(11) **EP 2 309 164 B1**
(45) Date de publication et mention de la délivrance du brevet: **03.08.2016**
(21) Numéro de dépôt: 10186728.1
(22) Date de dépôt: 06.10.2010
(51) Int. Cl.: F16L 37/092, F16L 37/091, F16L 21/05

(54) **Dispositif de raccordement instantané ayant des zones de guidage et d'étanchéité inversées**
Schnellkupplungsvorrichtung mit umgekehrtem Führungs- und Dichtungsbereich
Quick coupling device with inverted guiding and sealing zones

(30) Priorité: 06.10.2009 FR 0904761
(43) Date de publication de la demande: 13.04.2011
(73) Titulaire: PARKER HANNIFIN MANUFACTURING France SAS, 74100 Ville-la-Grand (FR)
(72) Inventeur: Le Quere, Philippe, 35830, Betton (FR)
(74) Mandataire: Lavialle, Bruno François Stéphane

(56) Documents cités:
- EP-A1- 0 333 950
- EP-A1- 1 701 080
- WO-A1-00/36327
- WO-A1-03/054434
- WO-A2-2006/037092
- WO-A2-2006/037092
- FR-A1- 2 227 483
- FR-A1- 2 923 888
- GB-A- 1 222 289
- US-A- 4 643 466
- US-A- 5 865 996

## Description

La présente invention concerne un dispositif de raccordement, plus particulièrement de type instantané, agencé pour permettre la connexion d'une extrémité d'un conduit à un élément d'un circuit de transport de fluide, ledit élément pouvant être un élément émetteur ou récepteur de fluide et notamment une canalisation, un distributeur, un organe régulateur de débit ou de pression, un actionneur, un réservoir, une pompe...

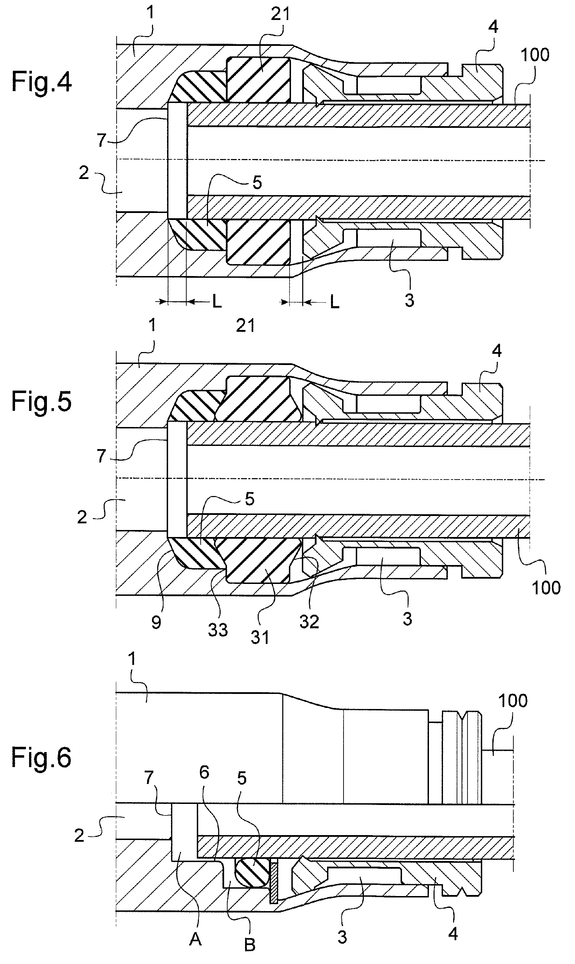

Un tel dispositif de raccordement, représenté à la figure 6, comporte généralement un corps 1 tubulaire délimitant un canal 2 comportant un tronçon 3 de réception d'une extrémité de conduite 100. Le tronçon de réception 3 est pourvu, successivement dans un sens d'insertion de l'extrémité de conduite 100 dans le tronçon de réception : d'un organe d'accrochage 4 de l'extrémité de conduite 100 dans le tronçon de réception 3, d'un organe d'étanchéité 5 pour enserrer une surface externe de l'extrémité de conduite, d'une surface de guidage 6 de l'extrémité de conduite dans le tronçon de réception et d'une butée 7 à l'enfoncement de l'extrémité de conduite dans le tronçon de réception. L'organe d'accrochage 4 est par exemple une pince, comme sur la figure 6, qui comporte un manchon ayant une extrémité divisée en bras élastiquement déformable depuis un état de libération de l'extrémité de conduite vers un état d'accrochage de l'extrémité de conduite. La pince est mobile axialement dans le tronçon de réception entre une position enfoncée de libération dans laquelle les bras sont dans leur état de libération et une position en retrait d'accrochage dans laquelle une surface du corps maintient les bras dans leur état d'accrochage de l'extrémité de conduite. L'organe d'accrochage 4 peut être également une rondelle ayant une circonférence interne divisée en une pluralité de dents, la rondelle étant déformable entre un état de passage et un état d'accrochage de l'extrémité de conduite.

Il est connu qu'un recul de l'extrémité de conduite, résultant d'une traction exercée sur l'extrémité de conduite 100 ou de la mise sous pression du circuit, crée un espace (zone A sur la figure 6) entre la face terminale de l'extrémité de conduite 100 et la butée 7. Cet espace est plus important avec les organes d'accrochage de type pince qu'avec ceux de type rondelle dentée.

Il est également connu que le fluide tend à stagner dans cet espace qui constitue une zone de rétention du fluide. Une telle zone de rétention est plus particulièrement préjudiciable dans les applications agroalimentaires lorsque le fluide transporté est un liquide périssable qui pourrait se dégrader dans la zone de rétention et polluer le liquide circulant dans le circuit. D'autres produits polluants, tels que des salissures, peuvent également stagner dans la zone de rétention.

Pour remédier à cet inconvénient, il a été envisagé des dispositifs de raccordement dans lesquels l'étanchéité du raccordement n'est plus réalisée sur la surface extérieure de l'extrémité de conduite mais sur la face terminale de celle-ci. Dans ces dispositifs de raccordement, l'élasticité de l'organe d'étanchéité compense le recul de l'extrémité de conduite empêchant la formation d'une zone de rétention. Ces dispositifs de raccordement présentent l'inconvénient que la butée de l'extrémité de conduite n'est pas franche de sorte que l'opérateur n'est pas sûr d'avoir compressé l'organe d'étanchéité de manière suffisante pour garantir l'étanchéité du raccordement après le recul du tube voire la solidité du raccordement.

Il est également connu du document US-A-4 643 466 un dispositif de raccordement sans surface de guidage de la conduite. Dans ces dispositifs de raccordement, une bague est montée dans le canal du dispositif pour centrer la conduite dans le dispositif. Un tel centrage est différent d'un guidage qui maintient un segment de la conduite le long d'une direction axiale d'un canal.

Il est au surplus prévu, dans les installations de fluide dans laquelle la qualité du fluide est surveillée, de procéder à des nettoyages réguliers du circuit en faisant circuler dans celui-ci un liquide de nettoyage.

Il est de plus connu du document WO-A-2006037092 un dispositif de raccordement conforme au préambule de la revendication 1.

Un but de l'invention est de fournir un moyen pour limiter les risques de pollution d'un fluide transporté, par des produits polluants présents dans des zones de rétention d'un dispositif de raccordement.

L'invention résulte d'une approche différente de celle ayant antérieurement prévalu. Selon cette approche, vérifiée expérimentalement, la zone A de rétention considérée habituellement, qui résulte du recul de l'extrémité de conduite, a des dimensions suffisamment importantes pour permettre une circulation de fluide, même si le débit de celle-ci est moindre que le débit au voisinage de l'axe central du raccord. La possibilité d'une telle circulation permet, éventuellement, à un liquide de nettoyage d'atteindre cette zone. En revanche, des expérimentations ont montré que l'espace existant entre la surface externe de l'extrémité de conduite et la surface de guidage du corps (zone B sur la figure 6) constitue une zone de rétention qui s'étend entre la zone de rétention habituellement considérée et l'organe d'étanchéité et qui, par ses dimensions réduites, n'autorise pas une circulation de fluide et ne peut être lavé par le liquide de nettoyage.

Il est donc proposé, conformément à l'invention, un dispositif de raccordement selon les caractéristiques de la revendication 1.

Ainsi, la position du joint permet d'empêcher que du fluide n'atteigne la zone de guidage de l'extrémité de conduite qui ne peut constituer dès lors une zone de rétention.

Selon un mode de réalisation particulier, les moyens de guidage comprennent une douille rapportée dans le tronçon de réception et, de préférence, la douille comprend une surface interne polygonale délimitant un passage de section inférieure à une section extérieure de l'extrémité de conduite telle qu'une surface polygonale à six pans.

Ceci permet de limiter l'aptitude de l'extrémité de conduite à se déformer, par exemple dans le sens d'une ovalisation de sa section, ce qui pourrait engendrer un défaut de contact, et donc une fuite, entre l'organe d'étanchéité et la surface extérieure de l'extrémité de conduite.

De préférence, la douille possède une première dimension axiale et une deuxième dimension axiale au voisinage respectivement d'un pourtour interne et d'un pourtour externe de la douille, la première dimension axiale étant supérieure à la deuxième dimension axiale.

Ceci permet d'améliorer le guidage de l'extrémité de conduite dans le corps du dispositif de raccordement et de limiter le risque de fuite résultant d'une déformation de l'extrémité de conduite.

De préférence, la douille comporte un flanc de forme tronconique du côté de l'organe d'accrochage et ledit organe d'accrochage est une pince déformable entre un état d'accrochage et un état de libération de l'extrémité de conduite et mobile axialement entre une position enfoncée dans laquelle le flanc de forme tronconique maintient la pince dans son état de libération et une position en retrait dans laquelle la pince est maintenu dans son état d'accrochage par une surface du corps.

La douille exerce alors, outre sa fonction de guidage, une fonction supplémentaire d'aide à l'insertion et l'extraction de l'extrémité de conduite en facilitant une déformation de la pince vers, voire au-delà, de son état de libération.

Avantageusement, l'organe d'étanchéité occupe sensiblement toute la gorge et, par exemple, l'organe d'étanchéité a une forme complémentaire de celle de la gorge.

Le recul de l'extrémité de conduite entraîne alors la libération d'un espace négligeable ne comportant pas de portion éloignée de l'axe central du raccord de sorte qu'une circulation du fluide y est favorisée.

De préférence alors, la gorge possède des flancs divergents.

La pression du fluide dans le circuit contribue alors à renforcer l'étanchéité en plaquant l'organe d'étanchéité contre les éléments qui l'entourent.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue partielle en demi-coupe longitudinale d'un dispositif de raccordement selon un premier mode de réalisation,
- la figure 2 est une vue analogue à la figure 1 d'un dispositif conforme à un deuxième mode de réalisation,
- les figures 3 et 4 sont des vues analogues à la figure 1 de ce dispositif de raccordement, après insertion d'une extrémité de conduite et après mise en pression du circuit dans lequel est implanté le dispositif de raccordement,
- la figure 5 est une vue analogue à la figure 1 d'un dispositif de raccordement selon un troisième mode de réalisation,
- la figure 6 est une vue analogue à la figure 1 d'un dispositif de raccordement conforme à l'art antérieur.

En référence aux figures, l'invention concerne un dispositif de raccordement comportant un corps 1 ayant une première section agencée pour recevoir une extrémité de conduite 100 et une deuxième section agencée pour être reliée à un canal d'un élément d'un circuit de transport de fluide, ledit élément pouvant être un élément émetteur ou récepteur de fluide et notamment une canalisation, un distributeur, un organe régulateur de débit ou de pression, un actionneur, un réservoir, une pompe... La deuxième section est connue en elle-même et comprend par exemple une portion filetée destinée à être engagée dans un tronçon taraudé du canal. La deuxième section ne fait pas l'objet de l'invention et ne sera pas plus détaillée ici.

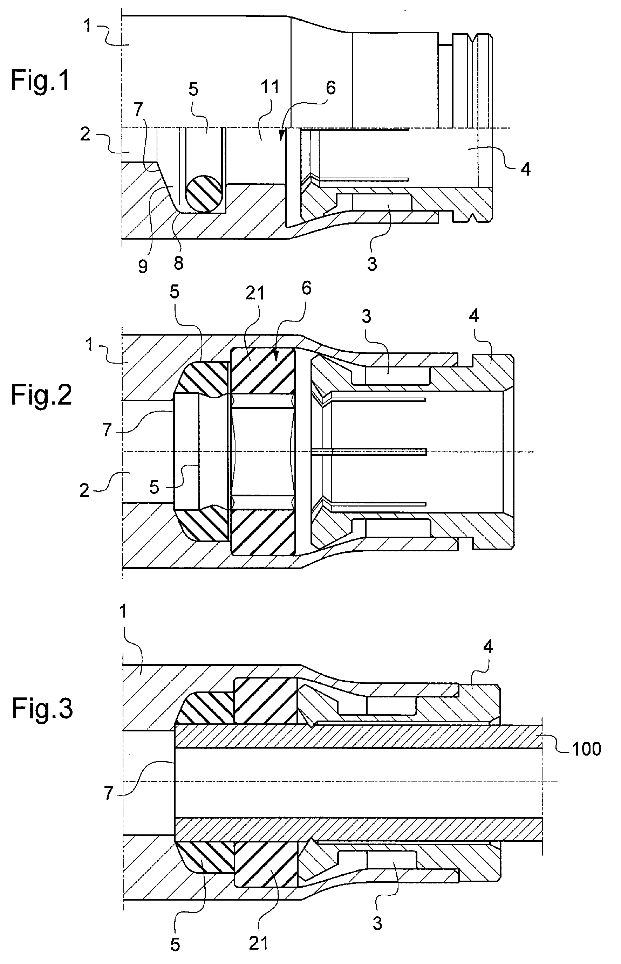

En référence plus particulièrement à la figure 1, le corps 1 délimite un canal 2 terminé, du côté de la première section du corps 1, par un tronçon 3 de réception de l'extrémité de conduite 100.

Le tronçon 3 est pourvu d'un organe d'accrochage 4 de l'extrémité de conduite 100 dans le tronçon 3, d'un organe d'étanchéité 5 pour enserrer une surface externe de l'extrémité de conduite 100, de moyens généralement désignés en 6 de guidage de l'extrémité de conduite 100 dans le tronçon 3 et d'une butée 7 à l'enfoncement de l'extrémité de conduite dans le tronçon 3.

Les moyens de guidage 6 sont ici formés par une collerette 11 en saillie dans le tronçon 3 et ayant une surface interne, ici cylindrique, assurant le guidage de l'extrémité de conduite 100.

L'organe d'accrochage 4 est reçu entre la collerette 11 des moyens de guidage 6 et l'orifice d'entrée du tronçon 3 et est connu en lui-même. L'organe d'accrochage 4 comprend ici une pince formée d'un manchon ayant une portion d'extrémité divisée en une pluralité de bras par des rainures axiales et une portion d'extrémité opposée en saillie à l'extérieur du corps 1. Les bras ont des extrémités libres pourvues d'une dent en saillie vers l'axe central du manchon et sont déformables entre un état d'accrochage dans lequel les dents délimitent un diamètre de passage inférieur à un diamètre extérieur de l'extrémité de conduite 100 et un état de libération dans lequel les dents délimitent un diamètre de passage égal à un diamètre extérieur de l'extrémité de conduite 100. Les extrémités libres des bras sont également pourvues d'un renflement externe pour coopérer avec une portion de paroi tronconique du tronçon 3 (cette portion de paroi est généralement appelée cône de serrage) et l'organe d'accrochage 4 est mobile :
- entre une position enfoncée de libération (au voisinage de la collerette 11) dans laquelle les bras sont libres de se déformer entre leurs deux états, et
- une position en retrait d'accrochage (au voisinage de l'orifice d'entrée) dans laquelle ladite portion de paroi tronconique maintient les bras dans leur état d'accrochage.

L'organe d'étanchéité 5 est disposé, selon l'invention, dans une gorge 8 ménagée entre la butée 7 et la collerette 11 des moyens de guidage 6. L'organe d'étanchéité 5 est ici réalisé en un matériau élastiquement compressible sous la forme d'un joint torique ayant un diamètre interne inférieur au diamètre extérieur de l'extrémité de conduite. La gorge 8 s'évase à l'opposé de son fond et possède, selon l'invention, un flanc tronconique 9 se raccordant au reste du canal 2.

Le flanc tronconique 9 possède, au voisinage de la liaison au canal 2, une portion annulaire ayant un diamètre interne inférieur au diamètre externe de l'extrémité de conduite 100 et formant la butée 7.

On comprend que lors de l'introduction de l'extrémité de conduite 100 dans le tronçon 3, l'extrémité de conduite 100 repousse l'organe d'accrochage 4 vers sa position de libération puis passe au travers. L'extrémité de conduite 100 passe ensuite dans la collerette 11 des moyens de guidage 6 et dans l'organe d'étanchéité 5 avant de toucher la butée 7.

Lorsque le circuit est mis sous pression, l'extrémité de conduite 100 recule entrainant l'organe d'étanchéité contre la collerette 11 des moyens de guidage 6 et l'organe d'accrochage 4 vers sa position d'accrochage de telle manière que les bras de l'organe d'accrochage 4 sont déformés dans leur état d'accrochage et enserrent l'extrémité de conduite 100.

Un opérateur peut réaliser une déconnexion de l'extrémité de conduite 100 en enfonçant l'organe d'accrochage 4 dans sa position de libération tout en tirant sur l'extrémité de conduite 100.

Les éléments identiques ou analogues à ceux précédemment décrits porteront la même référence numérique dans les modes de réalisation qui vont être décrits en références aux figures 2 et 5.

Dans le deuxième mode de réalisation représenté aux figures 2 à 4, les moyens de guidage 6 sont formés par une douille 21 rapportée dans le tronçon 3. La douille 21 est par exemple enfoncée à force dans le tronçon 3. La douille 21 peut également y être sertie, collée, bloquée ou fixée par tout autre moyen assurant une immobilisation de la douille 21 dans le tronçon 3. La douille 21 comprend une surface interne polygonale délimitant un passage de section inférieure à une section extérieure de l'extrémité de conduite 100. La surface interne de la douille 21 comprend ici six pans dans lesquels s'inscrit un cercle de diamètre légèrement inférieur au diamètre de l'extrémité de conduite 100.

La butée 7 est ici formée par une portion de surface radiale de forme annulaire qui s'étend depuis le flanc 9 de la gorge 8.

L'organe d'étanchéité 5 a une forme complémentaire de celle de la gorge 8 pour combler totalement celle-ci. L'organe d'étanchéité 5 a ici une surface interne cylindrique pourvue d'une saillie interne annulaire destinée à exercer localement sur l'extrémité de conduite 100 une pression plus importante renforçant localement le contact, et donc l'étanchéité, entre l'organe d'étanchéité et l'extrémité de conduite 100, sans trop augmenter la résistance à l'enfoncement de l'extrémité de conduite dans l'organe d'étanchéité.

Comme précédemment, l'extrémité de conduite 100 est raccordée en l'enfonçant dans le tronçon 3 jusqu'à ce qu'elle arrive en contact avec la butée 7 (figure 3).

La mise sous pression du circuit entraîne un recul de l'extrémité de conduite 100, et de l'organe d'accrochage 4 jusqu'à la position d'accrochage de ce dernier. Un recul d'une distance L ménage un espace de même longueur L entre la butée 7 et la face terminale de l'extrémité de conduite 100 (figure 4). Cet espace peu profond (du fait de la présence de l'organe d'étanchéité 5) peut facilement être lavé lors d'une opération de nettoyage consistant à faire circuler un liquide de nettoyage dans le circuit de transport.

Dans le troisième mode de réalisation représenté à la figure 5, seule la forme de la douille des moyens de guidage 6 a changé. La douille 31 possède une première dimension axiale et une deuxième dimension axiale au voisinage respectivement d'un pourtour interne et d'un pourtour externe de la douille 31, la première dimension axiale étant supérieure à la deuxième dimension axiale pour améliorer le guidage de l'extrémité de conduite 100 sans augmenter l'encombrement de la douille 31 au voisinage de la paroi du corps 1. La douille 31 comporte des flancs 32, 33 de forme tronconique. Le flanc 32 est voisin de l'extrémité libre des bras de l'organe d'accrochage 4. L'extrémité libre des bras de l'organe d'accrochage 4 a une surface interne ayant une forme complémentaire de celle du flanc 32 de telle manière que le flanc 32 maintienne l'organe d'accrochage dans son état de libération lorsque l'organe d'accrochage 4 est enfoncé dans sa position de libération. Ceci facilite la déconnexion, par l'opérateur, de l'extrémité de conduite.

Bien entendu, l'invention n'est pas limitée aux modes de réalisations décrits mais englobe toute variante entrant dans le champ de l'invention telle que définie par les revendications.

En particulier, l'organe d'accrochage peut être une pince, une rondelle dentée déformable, un verrou mobile radialement ou tout autre système de retenue de l'extrémité de conduite dans le tronçon de réception comme par exemple un jonc fendu.

En variante, la deuxième section du corps 1 peut être identique à la première section de telle sorte que le dispositif de raccordement permette d'unir deux extrémités de conduite l'une à l'autre.

L'invention est utilisable dans tout type de circuit de transport de fluide et notamment pour le transport de fluides alimentaires ou de peintures.

En variante, la gorge 8 possède des flancs divergents.

## Revendications

1. Dispositif de raccordement comportant un corps (1) tubulaire délimitant un canal (2) comportant un tronçon (3) de réception d'une extrémité de conduite (100), le tronçon de réception étant pourvu d'un organe d'accrochage (4) de l'extrémité de conduite dans le tronçon de réception, d'un organe d'étanchéité (5) pour enserrer une surface externe de l'extrémité de conduite, de moyens de guidage (6) de l'extrémité de conduite dans le tronçon de réception et d'une butée (7) à l'enfoncement de l'extrémité de conduite dans le tronçon de réception, l'organe d'étanchéité étant disposé dans une gorge (8), et l'organe d'accrochage (4) étant disposé entre les moyens de guidage (6) et une entrée du tronçon (3) de réception, **caractérisé en ce que** la gorge (8) est ménagée entre la butée (7) et les moyens de guidage (6), la gorge ayant un flanc tronconique (9) dont une portion tronconique ou annulaire forme la butée (7).

2. Dispositif selon la revendication 1, dans lequel les moyens de guidage comprennent une douille (21, 31) rapportée dans le tronçon de réception (3).

3. Dispositif selon la revendication 2, dans lequel la douille (21) comprend une surface interne polygonale délimitant un passage de section inférieure à une section extérieure de l'extrémité de conduite (100).

4. Dispositif selon la revendication 3, dans lequel la surface interne de la douille (21) comprend six pans.

5. Dispositif selon la revendication 2, dans lequel la douille (31) possède une première dimension axiale et une deuxième dimension axiale au voisinage respectivement d'un pourtour interne et d'un pourtour externe de la douille, la première dimension axiale étant supérieure à la deuxième dimension axiale.

6. Dispositif selon la revendication 5, dans lequel la douille (31) comporte un flanc (32) de forme tronconique du côté de l'organe d'accrochage (4) et ledit organe d'accrochage est une pince déformable entre un état d'accrochage et un état de libération de l'extrémité de conduite et mobile axialement entre une position enfoncée dans laquelle le flanc de forme tronconique maintient la pince dans son état de libération et une position en retrait dans laquelle la pince est maintenu dans son état d'accrochage par une surface du corps (1).

7. Dispositif selon la revendication 1, dans lequel l'organe d'étanchéité (5) occupe sensiblement toute la gorge (8).

8. Dispositif selon la revendication 7, dans lequel l'organe d'étanchéité (5) a une forme complémentaire de celle de la gorge (8).

9. Dispositif selon la revendication 8, dans lequel la gorge (8) possède des flancs divergents.

## Patentansprüche

1. Verbindungsvorrichtung, umfassend ein rohrförmiges Gehäuse (1), das einen Kanal (2) begrenzt, der einen Aufnahmeabschnitt (3) zur Aufnahme eines Leitungsendes (100) hat, wobei der Aufnahmeabschnitt mit einem Befestigungselement (4) zur Befestigung des Leitungsendes in dem Aufnahmeabschnitt, einem Dichtungselement (5) zum Einspannen einer Außenfläche des Leitungsendes, Führungsmitteln (6) zum Führen des Leitungsendes in dem Aufnahmeabschnitt sowie einem Anschlag (7) entgegen dem Eindrücken des Leitungsendes in den Aufnahmeabschnitt versehen ist, wobei das Dichtungselement in einer Nut (8) angeordnet ist, und das Befestigungselement (4) zwischen den Führungsmitteln (6) und einer Einlassöffnung des Aufnahmeabschnitts (3) angeordnet ist, **dadurch gekennzeichnet, dass** die Nut (8) zwischen dem Anschlag (7) und den Führungsmitteln (6) ausgebildet ist, wobei die Nut eine kegelstumpfförmige Flanke (8) hat, von der ein kegelstumpfförmiger oder ringförmiger Abschnitt den Anschlag (7) bildet.

2. Vorrichtung nach Anspruch 1, wobei die Führungsmittel eine Hülse (21, 31) umfassen, die in den Aufnahmeabschnitt (3) eingebracht ist.

3. Vorrichtung nach Anspruch 2, wobei die Hülse (21) eine polygonale Innenfläche umfasst, die einen Durchlass mit einem Querschnitt begrenzt, der kleiner als ein Außenquerschnitt des Leitungsendes (100) ist.

4. Vorrichtung nach Anspruch 3, wobei die Innenfläche der Hülse (21) sechs Seitenflächen umfasst.

5. Vorrichtung nach Anspruch 2, wobei die Hülse (31) eine erste axiale Abmessung und eine zweite axiale Abmessung in der Nähe eines inneren Umfangs bzw. eines äußeren Umfangs der Hülse hat, wobei die erste axiale Abmessung größer als die zweite axiale Abmessung ist.

6. Vorrichtung nach Anspruch 5, wobei die Hülse (31) auf der Seite des Befestigungselements (4) eine kegelstumpfförmige Flanke (32) hat und das genannte Befestigungselement eine Klemme ist, die zwischen einem Befestigungszustand und einem Freigabezustand zur Freigabe des Leitungsendes verformbar und axial zwischen einer hineingedrückten Position, in der die kegelstumpfförmige Flanke die Klemme in ihrem Freigabezustand hält, und einer zurückgezogenen Position beweglich ist, in der die Klemme von einer Oberfläche des Gehäuses (1) in ihrem Befestigungszustand gehalten wird.

7. Vorrichtung nach Anspruch 1, wobei das Dichtungselement (5) im Wesentlichen die gesamte Nut (8) einnimmt.

8. Vorrichtung nach Anspruch 7, wobei das Dichtungselement (5) eine zu der der Nut (8) komplementäre Form hat.

9. Vorrichtung nach Anspruch 8, wobei die Nut (8) divergierende Flanken hat.

## Claims

1. A coupling device comprising a tubular body (1) defining a channel (2) having a reception segment (3) for receiving a pipe end (100), the reception segment being provided with a locking member (4) for locking the pipe end in the reception segment, a sealing member (5) for fitting tightly against an outside surface of the pipe end, guide means (6) for guiding the pipe end in the reception segment, and an abutment (7) for stopping the pipe end being pushed into the reception segment, the sealing member being placed in a groove (8), and the locking member (4) is placed between the guide means (6) and an inlet to the reception segment (3), **characterized in that** the groove (8) is formed between the abutment (7)and the guide means (6), the groove having a frustoconical flank (9) having a portion frustoconical or annular forming the abutment (7).

2. A device according to claim 1, wherein the guide means comprise a bushing (21, 31) fitted in the reception segment (3).

3. A device according to claim 2, wherein the bushing (21)includes a polygonal inside surface defining a passage of section smaller than the outside section of the pipe end (100).

4. A device according to claim 3, wherein the inside surface of the bushing (21) is hexagonal.

5. A device according to claim 2, wherein the bushing (31) possesses a first axial dimension and a second axial dimension respectively in the vicinity of an inside outline and of an outside outline of the bushing, the first axial dimension being longer than the second axial dimension.

6. A device according to claim 5, wherein the bushing (31) includes a flank (32) of frustoconical shape beside the locking member (4), and said locking member is a clamp deformable between a locking state and a release state for the pipe end, and is movable axially between a pushed-in position in which the frustoconically-shaped flank holds the clamp in its release state, and a pulled-back position in which the clamp is held in its locking state by a surface of the body (1).

7. A device according to claim 1, wherein the sealing member (5) occupies substantially all of the groove (8).

8. A device according to claim 7, wherein the sealing member (5) is of a shape that is complementary to the shape of the groove (8).

9. A device according to claim 8, wherein the groove (8) possesses diverging flanks.
